Europäisches Patentamt

European Patent Office

Office européen des brevets

(19)

(11) Veröffentlichungsnummer : **0 196 014**
**B1**

(12) **EUROPÄISCHE PATENTSCHRIFT**

(45) Veröffentlichungstag der Patentschrift :
07.03.90

(51) Int. Cl.⁵ : **B 60 N   2/48**

(21) Anmeldenummer : 86103760.4

(22) Anmeldetag : 19.03.86

(54) Kopfstütze.

(30) Priorität : 26.03.85 DE 3510863

(43) Veröffentlichungstag der Anmeldung :
01.10.86 Patentblatt 86/40

(45) Bekanntmachung des Hinweises auf die Patenter-
teilung : 07.03.90 Patentblatt 90/10

(84) Benannte Vertragsstaaten :
AT FR GB IT SE

(56) Entgegenhaltungen :
DE--A-- 2 332 610
DE--A-- 2 948 537
DE--A-- 3 021 122
DE--A-- 3 327 591
DE--A-- 3 435 478
DE--B-- 2 808 381
FR--A-- 2 355 483
FR--A-- 2 522 947

(73) Patentinhaber : **Butz, Eugen Otto**
**Krabbenburg 3**
**D-4010 Hilden (DE)**

(72) Erfinder : **Butz, Eugen Otto**
**Krabbenburg 3**
**D-4010 Hilden (DE)**

(74) Vertreter : **Ostriga, Harald, Dipl.-Ing. et al**
**Patentanwälte Dipl.-Ing. Harald Ostriga Dipl.-Ing.**
**Bernd Sonnet Stresemannstrasse 6-8**
**D-5600 Wuppertal 2 (DE)**

EP 0 196 014 B1

## Beschreibung

Die Erfindung betrifft eine Kopfstütze für Kraftfahrzeugsitze, wie sie entsprechend dem Oberbegriff des Patentanspruchs 1 durch die DE-A-3 327 591 bekanntgeworden ist.

Entsprechend der DE-A-3 327 591 ist jede aus Stahl bestehende Haltestange unlösbar fest und unverschieblich in einem im Sitzlehnenrahmen einsteckverrastbaren hülsenartigen Kunststoff-Führungsteil aufgenommen. An das Führungsteil schließt sich einstückig und stoffschlüssig eine auch den übrigen Axialbereich der Haltestange dicht umschließende Verlängerung an. Die Haltestange gemäß der DE-A-3 327 591 weist also eine durch Umspritzung hergestellte Kunststoffummantelung auf. Auf dieser Kunststoffummantelung ist jeder den Polsterträger haltende Haltestangenaufsatz gleitverschieblich höhenverstellbar angeordnet.

Der Erfindung liegt die Aufgabe zugrunde, eine Kopfstütze gemäß der DE-A-3 327 591 konstruktiv noch einfacher zu gestalten, wobei der Erfinder von der Überlegung ausgegangen ist, daß soweit als möglich vorhandene Bauelemente übernommen werden sollten und z. B. von serienmäßig eingesetzten Haltestangen mit 12 mm auszugehen ist. Dadurch soll es möglich sein, sowohl das Führungsteil für die Aufnahme der jeweiligen Haltestange in der Rückenlehne als auch das Bauprinzip der in der älteren eigenen Patentanmeldung DE-A-3 435 478 (veröffentlicht am 03.04.86) beschriebenen Rastfeder oder eine Klemmschelle ohne funktionelle Änderungen oder prinzipiell die Konstruktion nach der DE-B-2 332 610 zu übernehmen.

### Lösung

Ausgehend von einer Kopfstütze der im Oberbegriff des Patentanspruches 1 vorausgesetzten Art wird diese Aufgabe durch die kennzeichnenden Merkmale des Patentanspruches 1 gelöst.

### Einige Vorteile

Durch die Erfindung wird in einfacher Weise erreicht, daß ohne Einformung der stählernen Haltestangen die Kunststoffummantelung je nach gewünschter Farbe, Querschnitt und stilistischer Ausgestaltung noch nachträglich durch Aufschieben auf die Haltestangen aufgebracht werden kann, wobei das Führungsteil als Widerlager dient. Durch die erfindungsgemäße Konstruktion wird sichergestellt, daß der z.B. zylindrische Haltestangenaufsatz und dessen Teile bei der Höhenverstellung der Kopfstütze nicht stören, da diese Teile in den Ringraum zwischen Kunststoffummantelung und Haltestange zumindest teilweise eintauchen.

Auf diese Weise hat man es somit auch in der Hand, die Kunststoffummantelung als relativ preiswerten Spritzgußartikel materialmäßig einstückig zu formen. Da die Kunststoffummantelung nachträglich aufgeschoben wird, können sich auch keine Probleme durch Schrumpfspannungen ergeben, die beim Einbetten eines metallischen Werkstoffes in einem Kunststoff unter Umständen auftreten können. Auch beim Aushärten auftretende Spannungen können sich nicht in Form eines Reißens der Ummantelung oder einer sonstigen Beschädigung der Konstruktion abbauen, da für die Ummantelung ein so flexibles bzw. nachgiebiges Material gewählt werden kann, daß diese Probleme ausscheiden.

Da alle anderen Konstruktionselemente baukastenmäßig zu allen möglichen Stilrichtigen, Farben und Durchmessern der Kunststoffummantelungen passen, weil sie identisch sind, ist die Lagerhaltung relativ einfach, da lediglich unterschiedliche Kunststoffummantelungen bereitgehalten und je nach Bedarf auf den stets gleichbleibenden Haltestangen mit ihren sonstigen Konstruktionsteilen angeordnet zu werden brauchen.

Die Ummantelung aus Kunststoff ist demgemäß nur im Bereich zwischen Führungsteiloberseite und etwa Neigungsverstellagerunterseite angeordnet. Auch in Höchststellung der Kopfstütze ist nur der mit Kunststoff ummantelte Teil der Haltestangen sichtbar.

Der Standarddurchmesser für Haltestangen beträgt in der Regel 12 mm. Diese Haltestangen werden verchromt, verzinkt oder in sonstiger Weise an ihrer Oberfläche bearbeitet, beispielsweise auch, um die beim Ziehen der Haltestangen auftretenden oberflächennahen Materialverformungen zu beseitigen, wofür gegebenenfalls teure Bearbeitungsvorgänge wie Schliefen o. dgl. erforderlich sind. Bei Anwendung der Erfindung hat man es in der Hand, auf diese zusätzlichen Bearbeitungsvorgänge und/oder auf das Veredeln der Oberflächen durch Verchromen o. dgl. ganz zu verzichten. Außerdem ist der Außendurchmesser der Kunststoffummantelung im Vergleich zum Außendurchmesser der Haltestangen relativ groß, so daß auch ein stilistischästhetisch günstiger Eindruck beim Beschauer entsteht.

Im Rahmen des Erfindungsgedankens (Aufgabe und Lösung) liegen auch Ausführungsformen, bei denen keine Rastwiderlager vorhanden sind wie sie aus der älteren Patentanmeldung DE-A-3 435 478 hervorgehen, sondern z. B. zur Rastverstellung und/oder zur Schwenkverstellung mittels Drehlager (Schwenklager) dienende Konstruktionsteile in der Kopfstütze Anwendung finden. Hierfür bietet z. B. die DE-B-2 332 610 eine der möglichen konstruktiven Lösungen.

### Weitere Ausführungsformen

In Patentanspruch 2 ist eine vorteilhafte Ausführungsform der Erfindung beschrieben, bei welcher der die Kunststoffummantelung gegen Verdrehen und Verschieben fixiert ist, und zwar mindestens durch einen auf der Innenseite der Kunststoffummantelung angeordneten Vor-

2

sprung, der z. B. durch eine Kante oder Schulter gebildet sein kann, die in entsprechende Ausnehmungen der Haltestange eingreift. Auf diese Weise ist es möglich, den fertigen Mantel auf die Haltestange zu schieben und genau zu positionieren und zu fixieren.

Patentanspruch 3 beschreibt eine Ausführungsform, bei welcher eine Ausnehmung am Führungsteil als Widerlager für die Kunststoffummantelung dient.

In den Patentansprüchen 4 bis 6 sind vorteilhafte Ausführungsformen beschrieben. Bei einer größer dimensionierten Ausbildung der Kunststoffummantelung ist diese aus spritztechnischen- und Komfortgründen in den z. B. vier Wänden mit Faltnuten und/oder Faltwänden versehen. Dadurch ist die Kunststoffummantelung in sich elastisch. Hierdurch wird unter anderem verhindert, daß sich der Kopfkasten bzw. der Polsterträger bei der Vor- und Zurückverstellung ungünstig aufweitet, wenn die Kunststoffummantelung zur Anlage an den Polsterträger gelangen sollte. Auf jeden Fall läßt die Elastizität beider Körper, d. h. des Polsterträgers und der Kunststoffummantelung eine Verstellbarkeit zu, die bei einem starren Körper zur einer großen und unzulässigen Aufweitung des Polsterträgers führen würde. Der Verschluß dieses Polsterträgers erfolgt wie bisher mit einer Verschlußkappe von oben. Um ein Anschlagen des Polsterträgers an die Haltestange und dort eine Verformung auszuschließen, ist dieser an seiner Unterseite entsprechend dem Verstellwinkelbereich trichterförmig erweitert. Die Kunststoffummantelung kann durch Extrudieren oder Spritzgießen materialmäßig einstückig geformt sein.

In der Zeichnung ist die Erfindung — teils schematisch — an einem Ausführungsbeispiel veranschaulicht. Es zeigen :

Fig. 1 einen teilweisen Längsschnitt durch eine Kopfstütze in der tiefstmöglichen Raststellung ;

Fig. 2 eine Darstellung entsprechend Fig. 1 in der höchstmöglichen Raststellung der Kopfstütze ;

Fig. 3 einen Teilquerschnitt nach der Linie III-III der Fig. 1 ;

Fig. 4 eine ausschnittsweise Vergrößerung bei einer weiteren Ausführungsform der Erfindung.

Mit dem Bezugszeichen 1 ist ein z. B. aus einem metallischen Werkstoff bestehender Polsterträger bezeichnet, der an seiner Oberseite durch eine Haube 2 verschlossen ist. Polsterträger 1 und Haube 2 sind in einem Polsterkörper 3 angeordnet, der z. B. aus geschäumtem Kunststoff bestehen kann. Der Polsterträger 1 ist in seinem unteren Längenabschnitt L nach außen hin konisch erweitert und mündet in eine nach außen, unten, ausmündende Durchbrechung 4, durch die bei der dargestellten Ausführung zwei mit Abstand und parallel zueinander verlaufende Haltestangen 5 hindurchtreten, die bei dieser Ausführungsform aus einem metallischen Werkstoff, insbesondere aus einem geeigneten Stahl, bestehen. Aus der Zeichnung ist jeweils nur eine der Haltestangen 5 ersichtlich. Die jeweils nicht dargestellte Haltestange 5 ist entsprechend ausgestaltet.

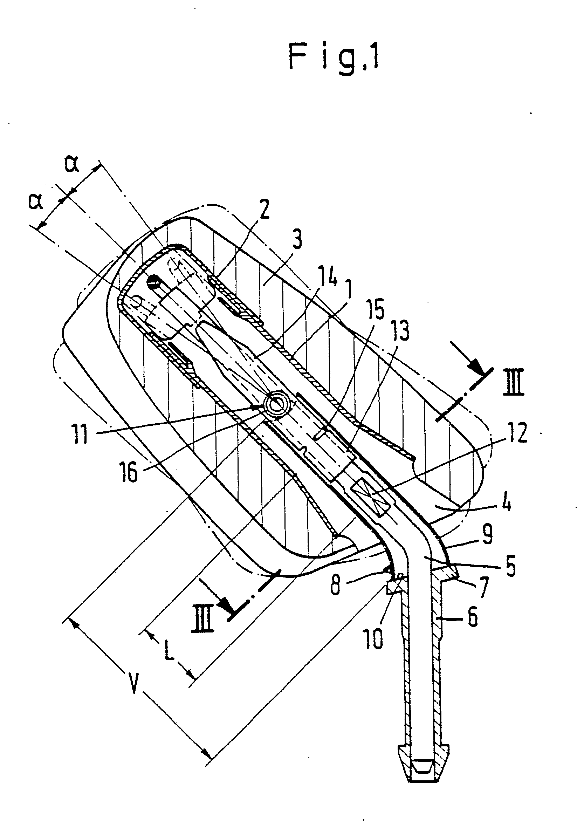

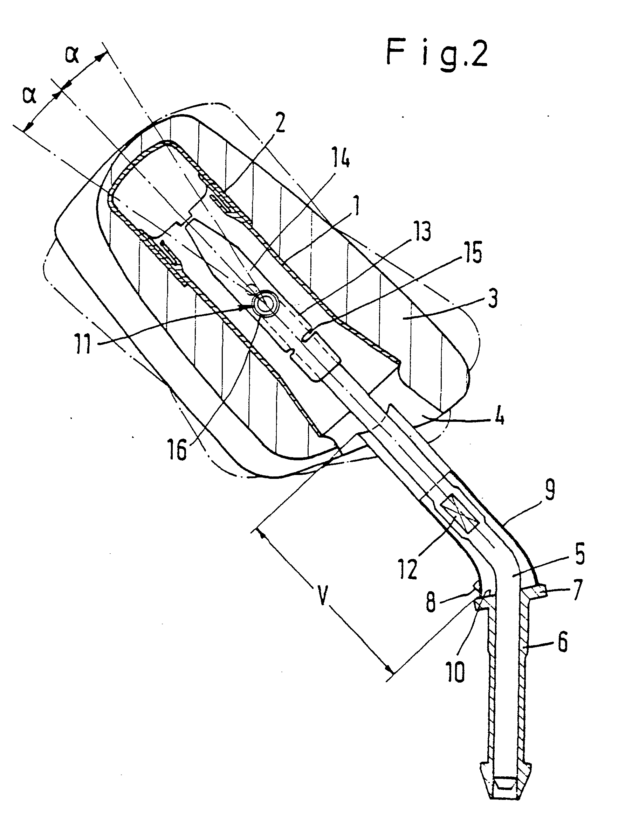

Die Haltestange 5 ist an ihrem unteren Ende in einem Führungsteil 6 angeordnet, das sich in der nicht dargestellten Rückenlehne des Kraftfahrzeugsitzes befindet. Das Führungsteil 6 weist an seinem oberen Ende ein flanschförmiges Widerlager 7 mit einer Zentrierringschulter 8 für eine Kunststoffummantelung 9 in Form eines Kunststoffschlauches auf. Die Kunststoffummantelung 9 ist gegen die Stirnfläche 10 des Führungsteiles 6 geschoben und an der Zentrierringschulter 8 gegenüber der Haltestange 5 auch zentriert. Die Länge V der Kunststoffummantelung 9 ist so bemessen, daß in der aus Fig. 1 ersichtlichen unteren Stellung der aus Polsterträger 1, Polsterkörper 2 und einem nicht dargestellten Überzug des Polsterkörpers 2 bestehenden Kopfstütze die Kunststoffummantelung 9 etwa bis zum Drehpunkt eines Neigungsverstellagers 11 reicht und bei der aus Fig. 2 ersichtlichen obersten Stellung dieser Kopfstütze sich noch innerhalb der Durchbrechung 4 der Kopfstütze befindet, so daß bei jeder Stellung der Kopfstütze immer nur die Ummantelung 9 und nicht die blanken Haltestangen 5 zu sehen sind. Die Kunststoffummantelung 9 ist durch eine Verdrehsicherung 12 verdrehsicher an der Haltestange 5 angeordnet und umgibt diese mit Ringspalt. Dadurch wird es möglich, daß beim Höhenverstellen der Kopfstütze — wie aus Fig. 1 ersichtlich — ein Hülsenteil 13 des Haltestangenaufsatzes 11 in diesen Ringspalt eintauchen kann und dadurch ebenfalls von Kunststoffummantelung 9 umschlossen ist. Die Kunststoffummantelung ist an ihrer Oberseite Konkav ausgespart, so daß ein Verschieben bis gegen die Unterseite des Schwenklagers des Haltestangenaufsatzes 11 möglich ist.

Mit dem Bezugszeichen 14 ist ein Rastarm bezeichnet, der die gleiche Ausbildung und Anordnung aufweisen kann, wie er in der älteren deutschen Patentanmeldung DE-A-3 435 478 bereits beschrieben und dargestellt wurde. Der eigenfedernde Rastarm 14 weist an seinem freien Ende einen nicht näher bezeichneten Rastnocken auf, der schnappverrastend in einen sich etwa in der Schwenkebene erstreckenden nicht dargestellten, mit Rastkerben versehenen, z. B. ebenfalls eigenfedernden, elastischen Wandteil eingreift, der an der äußeren Schmalwand des Kastenträgers oder der Haube 2 angeordnet ist.

Das Hülsenteil 13 ist mit dem Rastarm 14 materialmäßig einstückig, beispielsweise aus Kunststoff, verbunden. Zur Höhenarretierung ist das Hülsenteil 13 von einer nicht dargestellten Arretierfeder teilweise durchgriffen, wozu das Hülsenteil 13 entsprechende Aussparungen 15 aufweist. Die Arretierfeder wirkt schnappverrastend mit Rastkerben der Haltestange 5 zusammen. Am oberen, d. h. sitzlehnenfernen Ende des Hülsenteils 13 sind — was aus der Zeichnung allerdings nicht hervorgeht — beiderseits zueinander koaxiale und quer abstehende, im wesentlichen gleichgestaltete Drehzapfen 16 materialmäßig einstückig mit dem Rastarm 14 und dem Hülsenteil 13 verbunden. Die Drehzapfen 16 bestehen somit ebenfalls aus Kunststoff. Diese Drehzapfen 16 sind in nicht dargestellten, polsterträgerseitigen Lagerausnehmungen eingeschoben und dort eingerastet, was durch drehzapfenseitige Abphasungen erleichtert wird. Im übrigen ist die Ausbildung dieser Lagerungs- und Schnappelemente wie in der älteren Patentanmeldung DE-A-3 435 478 beschrieben.

Der Verstellweg ist bei der dargestellten Ausführungsform mit Y beschrieben.

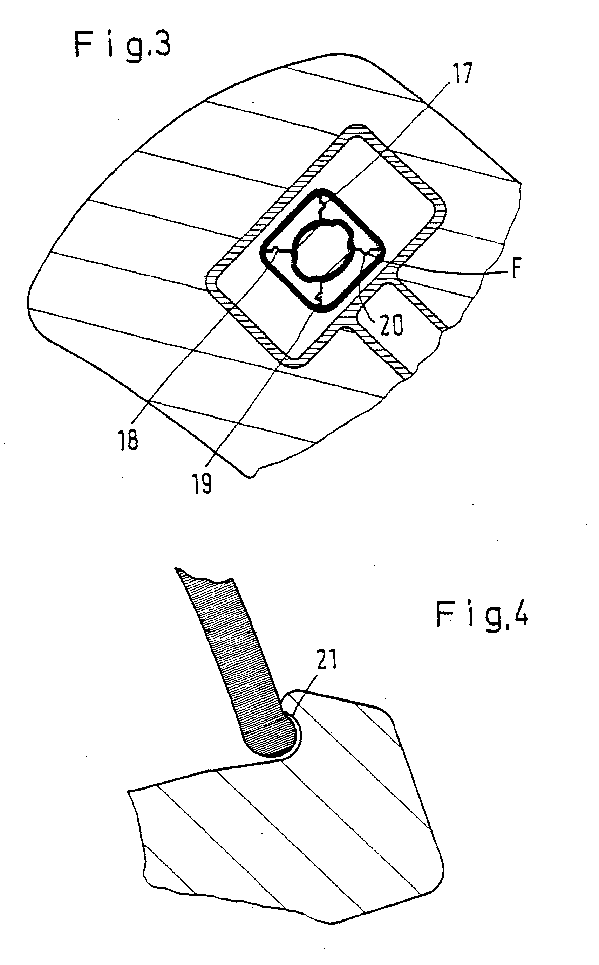

Die Kopfstütze läßt sich im übrigen nach beiden Seiten um den Winkel α schwenken und durch den betreffenden Rastarm 14 einrasten. Die trichterförmige Erweiterung des Polsterträgers 1 ist dabei auf dem Längenabschnitt L so gestaltet, daß bei der maximalen Verschwenkung um den Winkel 2α ein Anschlagen gegen den Polsterträger 1 ausgeschlossen ist oder nur in unwesentlichen Maße erfolgt. Dies ist unschädlich, da die Kunststoffummantelung 9 — wie aus Fig. 3 ersichtlich ist — über Faltwände 17, 18, 19 und 20 gegen die Haltestange 5 abgestützt ist. Die Faltwände 17 bis 20 sind in gewisser Hinsicht federelastisch ausgebildet, besitzen mindestens ein so großes Rückstellvermögen, daß nach Einwirkung einer Kraftbeanspruchung die ursprüngliche Form wieder zurückgebildet wird. Aus diesem Grunde ist die Ummantelung 9 auch formstabil.

Die Fig. 3 läßt erkennen, daß die Ummantelung 9 im Querschnitt quadratisch ausgestaltet ist. Allerdings kann auch eine andere Querschnittsform, beispielsweise eine ovale, polygonförmige oder kreisrunde Querschnittsform, in Betracht kommen. Des weiteren ist es möglich, die Ummantelung 9 als Faltenbalg auszubilden und/oder die Ummantelung 9 über materialmäßig einstückige Stege gegen die Oberfläche der Haltestangen 5 abzustützen.

Bei der aus Fig. 4 ersichtlichen Abwandlung besitzt die Kunststoffummantelung 9 einen auswärts gerichteten Ringwulst, der unter einen nach innen gerichteten, formmäßig angepaßten Kragen des Führungsteils 6 greift und dadurch die Kunststoffummantelung 9 haltert und zentriert.

Die in der Beschreibung, in der Zusammenfassung und in den Patentansprüchen beschriebenen sowie aus der Zeichnung ersichtlichen Merkmale können sowohl einzeln als auch in beliebigen Kombinationen für die Verwirklichung der Erfindung wesentlich sein.

Bezugszeichenliste

1 Polsterträger
2 Haube
3 Polsterkörper
4 Durchbrechung
5 Haltestange
6 Führungsteil
7 flanschförmiges Widerlager
8 Zentrierringschulter
9 Kunststoffummantelung
10 Stirnfläche
11 Haltestangenaufsatz
12 Verdrehsicherung
13 Hülsenteil
14 Rastarm
15 Aussparung
16 Drehzapfen
17 Faltwand
18 Faltwand
19 Faltwand
20 Faltwand
21 Wulst
α Schwenkwinkel Kopfstütze
L unterer Längenabschnitt des Kastenträgers
V Länge der Kunststofummantelung
Y Verstellweg der Kopfstütze

**Patentansprüche**

1. Kopfstütze für Kraftfahrzeugsitze, mit einem von einem Polsterkörper (3) umgebenen Polsterträger (1), welcher an mindestens einer, von einer Kunststoffummantelung (9) umschlossenen Haltestange (5) mittels eines Haltestangenaufsatzes (11) aus Kunststoff in Axialrichtung höhenverstellbar ist und welcher in Neigungspositionen einstellbar und arretierbar ist, wobei dem in einer Sitzrückenlehne befindlichen Endbereich der Haltestange (5) ein in der Rückenlehne angeordnetes Führungsteil (6) zugeordnet ist, dadurch gekennzeichnet, daß jede Haltestange (5) nur zwischen der oberen Stirnfläche (10) des Führungsteils (6) und einem sich um ein begrenztes Maß in eine Durchbrechung (4) des Polsterkörpers (3) bzw. des Polsterträgers (1) hineinerstreckenden Längenabschnitt (V) mit Ringspalt von der Kunststoffummantelung (9) umschlossen ist, derart, daß der Haltestangenaufsatz (11) bei Höhenverstellung der Kopfstütze in den Ringspalt eintaucht.

2. Kopfstütze nach Anspruch 1, dadurch gekennzeichnet, daß die Kunststoffummantelung (9) durch eine Verdrehsicherung (4) verdrehsicher auf der Haltestange (5) angeordnet ist.

3. Kopfstütze nach Anspruch 1 und/oder 2, dadurch gekennzeichnet, daß das Führungsteil (6) an seiner oberen Stirnfläche (10) eine Zentrierringschulter (8) für die Kunststoffummantelung (9) aufweist.

4. Kopfstütze nach Anspruch 1 und/oder einem der folgenden, dadurch gekennzeichnet, daß die Kunststoffummantelung (9) über mehrere nachgiebige Elemente wie Faltwände (17, 18, 19, 20), Stützfüße oder Rippen, nachgiebig abgestützt ist.

5. Kopfstütze nach Anspruch 1 oder einem der folgenden, dadurch gekennzeichnet, daß sich der Polsterträger (1) oder der Polsterkörper (3) an seiner nach unten weisenden Durchbrechung (4) entsprechend dem Schwenkwinkel (2α) der Kopfstütze trichterförmig erweitert.

6. Kopfstütze nach Anspruch 1 oder einem der folgenden, dadurch gekennzeichnet, daß die Kunststoffummantelung (9) mit einem Ringwulst (21) hinter einem ringförmig angepaßten Kragen des Führungsteils (6), vorzugsweise geschnappt, zentriert und gehalten ist.

## Claims

1. A headrest for motorcar seats, having a cushion-carrier (1) which is surrounded by a cushion body (3) and by means of a holder-rod head-piece (11) of plastics is adjustable for height in the direction axial to at least one holder-rod (5) enclosed in a plastics envelope (9) and may be set and locked in sloping positions, where a guide-part (6) arranged in the back of the seat is associated with the region at the end of the holder-rod (5) lying in the seat back, characterized in that each holder-rod (5) is enclosed with an annular gap by the plastics envelope (9) only between the upper endface (10) of the guide-part (6) and a portion (V) of its length extending into an opening (4) in the cushion body (3) or the cushion-carrier (1), in such a way that the holder-rod headpiece (11) during adjustment for height telescopes into the annular gap.

2. A headrest as in Claim 1, characterized in that the plastics envelope (9) is arranged on the holder-rod (5) to be secure against twisting by an anti-twisting device (4).

3. A headrest as in Claim 1 and/or 2, characterized in that the guide-part (6) exhibits on its upper endface (10) an annular centreing-shoulder (8) for the plastics envelope (9).

4. A headrest as in Claim 1 and/or one of the succeeding Claims, characterized in that the plastics envelope (9) is supported resiliently via a number of resilient elements such as accordion walls (17, 18, 19, 20), supporting feet or ribs.

5. A headrest as in Claim 1 and/or one of the succeeding Claims, characterized in that the cushion-carrier (1) or the cushion body (3) at the opening (4) in it pointing downwards, widens in the shape of a funnel to correspond with the angle (2α) of pivot of the headrest.

6. A headrest as in Claim 1 and/or one of the succeeding Claims, characterized in that by an annular bead (21) the plastics envelope (9) is centred and held, preferably snapped behind a matching annular collar on the guide-part (6).

## Revendications

1. Appui-tête pour sièges de véhicules automobiles, avec un support (1) pour partie rembourrée qui, entouré par un corps (3) rembourré, peut être positionné en hauteur dans le sens axial sur au moins une barre de maintien (5) embrassée par un gainage (9) en matière plastique au moyen d'un embout (11) de barre de maintien en matière plastique et qui peut être réglé et bloqué dans des positions d'inclinaison, tandis qu'une partie (6) formant guide, prévue dans le dossier du siège, est affectée à la zone de l'extrémité de la barre de maintien (5) qui se trouve dans un dossier de siège, caractérisé par le fait que chacune des barres de maintien (5) n'est embrassée moyennant formation d'une fente annulaire par le gainage (9) en matière plastique qu'entre la face frontale (10) supérieure de la partie (6) formant guide et un tronçon (V) de sa longueur s'étendant dans une proportion limitée à l'intérieur d'un passage (4) du corps (3) rembourré ou du support (1) pour partie rembourrée de telle sorte que lors du positionnement en hauteur de l'appui-tête, l'embout (11) de barre de maintien s'enfonce dans la fente annulaire.

2. Appui-tête suivant la revendication 1, caractérisé par le fait que le gainage (9) en matière plastique est installé de manière à en interdire la rotation sur la barre de maintien (5) par un frein (4) anti-rotation.

3. Appui-tête suivant les revendications 1 et/ou 2, caractérisé par le fait que la partie (6) formant guide présente sur sa face frontale (10) supérieure un épaulement (8) en anneau de centrage pour le gainage (9) en matière plastique.

4. Appui-tête suivant les revendications 1 et/ou l'une des revendications suivantes, caractérisé par le fait que le gainage (9) en matière plastique prend appui d'une manière élastique par l'intermédiaire de plusieurs éléments élastiques, tels que des cloisons (17, 18, 19, 20) à plissements, des pieds d'appui ou des nervures.

5. Appui-tête suivant la revendication 1 ou l'une des précédentes, caractérisé par le fait que le support (1) pour partie rembourrée ou le corps (3) rembourré va en s'évasant en forme d'entonnoir conformément à l'angle de pivotement (2α) de l'appui-tête à son ouverture de passage (4) orientée vers le bas.

6. Appui-tête suivant la revendication 1 ou l'une des précédentes, caractérisé par le fait que le gainage (9) en matière plastique est, de préférence, encliqueté, centré et maintenu par un bourrelet (11) annulaire derrière un collet de forme annulaire adaptée sur la partie (6) formant guide.

# Fig.1

# F i g . 2

F i g.3

17

F

20

18

19

F i g,4

21